# EUROPÄISCHE PATENTANMELDUNG

(11) **EP 0 999 439 A2**
(43) Veröffentlichungstag der Anmeldung: **10.05.2000**
(21) Anmeldenummer: 99122135.9
(22) Anmeldetag: 05.11.1999
(51) Int. Cl.: G01M 15/00

(54) **Verfahren zum Anzeigen der Fehlerhäufigkeit und der Fehlerfrequenz bei einem taktweise arbeitenden Fehlerinspektionssystem**

(30) Priorität: 05.11.1998 DE 19850969
(71) Anmelder: Balser AG, 22926 Ahrensburg (DE)
(72) Erfinder: Kaupp, Ansgar,Dr., 22926 Ahrensburg (DE); Quarta, Steffen, 22926 Ahrensburg (DE)
(74) Vertreter: Jaeschke, Rainer, Dipl.-Ing.

(57) **Zusammenfassung**

Die Erfindung betrifft ein Verfahren zum Anzeigen der Fehlerhäufigkeit und der Fehlerfrequenz bei einem taktweise arbeitenden Inspektionssystem, mit welchem zu prüfende Gegenstände nach der Inspektion als fehlerhaft oder fehlerfrei klassifiziert werden und das Prüfergebnis angezeigt wird. Zur Darstellung der Fehlerfrequenz und zum optischen Darstellen eventuell periodisch auftretender Fehler wird gemäß der Erfindung vorgeschlagen, daß eine Vielzahl von benachbarten unabhängigen diskreten Anzeigefeldern vorgesehen ist, die jeweils ein Prüfergebnis wenigstens eines geprüften Gegenstands darstellen und wenigstens zwei Anzeigearten aufweisen, um das Prüfergebnis, das einem fehlerfreien Gegenstand entspricht, in unterschiedlicher Weise zu dem Prüfergebnis darzustellen, das einem fehlerhaften Gegenstand entspricht, und daß die zeitlich aufeinanderfolgenden Prüfungsergebnisse durch räumlich aufeinanderfolgende benachbarte Anzeigefelder angezeigt werden.

## Beschreibung

Die Erfindung betrifft ein Verfahren zum Anzeigen der Fehlerhäufigkeit und der Fehlerfrequenz bei einem taktweise arbeitenden Inspektionssystem, mit welchem zu prüfende Gegenstände nach der Inspektion als fehlerhaft oder fehlerfrei klassifiziert werden und das Prüfergebnis angezeigt wird. Insbesondere betrifft die Erfindung die automatische Prüfung von stückigen Massenprodukten, wie optische Dätenträger, beispielsweise Compact-Discs, DVD's, CD-ROM's oder CD-R's sind.

Es ist aufgrund der immer steigenden Anforderungen an die Qualität erforderlich, auch bei Massenprodukten eine 100%-Prüfung durchzuführen. Dazu werden bei optischen Datenträger, wie Compact-Discs, CD-R's oder DVD's beispielsweise optische Prüfverfahren eingesetzt. Die als fehlerhaft detektierten optischen Datenträger werden anschließend aussortiert. Der laufende Prüfprozeß wird in der Regel durch eine elektronische Datenverarbeitungsanlage gesteuert und überwacht, und die wesentlichen Meßdaten und Fehlerklasifikationen sowie Prüfergebnisse werden auf wenigstens einem Monitor angezeigt. Unter einem Prüfergebnis ist im folgenden überwiegend die Klassifizierung in fehlerfreie oder zumindest brauchbare Gegenstände und fehlerhafte und somit unbrauchbare Gegenstände zu verstehen. Selbstverständlich ist es auch möglich, andere Prüfergebnisse entsprechend darzustellen Um den Produktionsprozeß beurteilen zu können, ist es zum einen erforderlich, die Fehlerart als solche zu klassifizieren. Zum anderen ist es zweckmäßig, die Menge aller fehlerhaften Gegenstände und somit des Ausschusses zu erfassen. Dazu ist es bekannt, die Fehlerhäufigkeit mittels eines Balkens auf dem Bildschirm darzustellen, dessen Gesamtlänge der Gesamtzahl oder einer vorbestimmten Menge der geprüften Gegenstände entspricht. In einem ersten Balkenabschnitt wird dabei die Menge der fehlerhaften Gegenstände in einer anderen Farbe oder mit einem anderen Muster dargestellt als in einem zweiten Balkenabschnitt, der der Menge der fehlerfreien Gegenstände entspricht. Die Längen der Balkenabschnitte in bezug auf die Gesamtlänge entsprechen jeweils dem Anteil an der Gesamtzahl der geprüften Gegenstände.

Neben der Menge und der Klassifizierung der Fehler als solchen ist es häufig auch wünschenswert zu erfahren, wann diese Fehler auftreten und ob diese Fehler beispielsweise periodisch sind. Auch hieraus können Rückschlüsse auf den laufenden Produktionsprozeß gezogen werden. Es ist offensichtlich, daß dies mit der oben beschriebenen Balkenanzeige nicht möglich ist.

Der Erfindung liegt daher die Aufgabe zugrunde, ein Verfahren zum Anzeigen der Fehlerrate zu schaffen, mit der die zeitliche Abfolge der Fehler darstellbar ist.

Die Aufgabe wird gemäß der Erfindung dadurch gelöst, daß eine Vielzahl von benachbarten unabhängigen diskreten Anzeigefeldern vorgesehen ist, die jeweils ein Prüfergebnis wenigstens eines geprüften Gegenstandes darstellen und wenigstens zwei Anzeigearten aufweisen, um das Prüfergebnis, das einem fehlerfreien Gegenstand entspricht, in unterschiedlicher Weise zu dem Prüfergebnis darzustellen, das einem fehlerhaften Gegenstand entspricht, und daß die zeitlich aufeinanderfolgenden Prüfungsergebnisse durch räumlich aufeinanderfolgende benachbarte Anzeigefelder angezeigt werden. Diese Darstellungsform hat den Vorteil, daß unmittelbar erkennbar ist, in welcher zeitlichen Folge die fehlerhaften Gegenstände aufgetreten sind. Daraus lassen sich Rückschlüsse ziehen, ob die fehlerhaften Gegenstände zufällig oder beispielsweise periodisch auftauchen, so daß ggf. in den laufenden Produktionsprozeß eingegriffen werden kann.

Grundsätzlich kann vorgesehen werden, daß die Anzahl der Anzeigefelder der Anzahl der zu prüfenden Gegenstände entspricht. Dies ist aber bei der Prüfung von Massenprodukten in der Regel nicht durchführbar, da die Darstellung dann zu unübersichtlich wäre. Es ist daher gemäß der Erfindung vorgesehen, daß zumindest bei einer größeren Anzahl von Prüfergebnissen als Anzeigefelder das Prüfergebnis des zuletzt geprüften Gegenstandes durch das Anzeigefeld dargestellt wird, das das unmittelbar vorhergehende Prüfergebnis zeigt, und daß die vorhergehenden Prüfergebnisse jeweils durch ein um eins inkrementiertes Anzeigefeld dargestellt werden derart, daß die zeitlich aufeinanderfolgenden Prüfergebnisse fließend durch räumlich aufeinanderfolgende benachbarte Anzeigefelder dargestellt werden. Dies hat den Vorteil, daß unabhängig von der Anzahl der zu prüfenden Gegenstände stets die letzten, der Anzahl der Anzeigefelder entsprechenden Prüfergebnisse dargestellt werden. Die Anzahl ist dabei zweckmäßigerweise so gewählt, daß die dargestellten letzten Ergebnisse eventuell periodisch auftretende Fehler erkennen lassen.

Vorzugsweise sind die Anzeigefelder Bildsegmente eines Bildschirmes. Dadurch läßt sich die Darstellung auf einem Monitor einer elektronischen Datenverarbeitung ohne weiteres darstellen.

Wie im einzelnen die Form der Anzeigefelder beispielsweise auf dem Monitor gestaltet sind, ist grundsätzlich beliebig. Es kann vorgesehen werden, daß die benachbarten Anzeigefelder einen Abstand zueinander aufweisen oder unmittelbar aneinander angrenzen. Weiterhin kann es zweckmäßig sein, wenn die Anzeigefelder durch wenigstens eine Trennlinie voneinander getrennt sind, die einen Kontrast zu den wenigstens zwei Anzeigearten besitzt. Durch diese Maßnahmen wird eine gut wahrnehmbare und auswertbare optische Darstellung der fehlerhaften Gegenstände gegenüber den fehlerfreien Gegenstände erzielt.

Gemäß einer weitergehenden Ausführungsform ist vorgesehen, daß die Anzahl der fehlerhaften Gegenstände und/oder die Anzahl der fehlerfreien Gegenstände in Relation zur Gesamtzahl der geprüften Gegenstände gesetzt werden, und daß bei Unterschreiten oder Überschreiten eines einer Relation zugeordneten Schwellenwerts die einen fehlerfreien Gegenstand darstellende Anzeigeart und/oder die einen fehlerhaften Gegenstand darstellende Anzeigeart der Anzeigefelder geändert wird. Dies hat den Vorteil, daß das Überschreiten einer bestimmten Fehlerquote leicht erkennbar ist, obwohl die einzelnen Prüfergebnisse nicht mehr zusammengefaßt dargestellt werden. Es kann beispielsweise vorgesehen werden, daß das Anzeigefeld im Regelfall bei einem fehlerfreien Gegenstand grün und bei einem fehlerhaften Gegenstand rot ist. Sofern die Relation von fehlerhaften Gegenständen zur Gesamtzahl ein bestimmtes Verhältnis übersteigt, kann vorgesehen werden, daß beispielsweise das Anzeigefeld bei einem fehlerfreien Gegenstand gelb wird. Auch kann vorgesehen werden, daß die Anzeigefelder in einem solchen Fall zwischen zwei Anzeigearten periodisch wechseln, beispielsweise blinken.

Vorstehend wurde die Erfindung anhand einer einzelnen Anzeige erläutert. Es ist selbstverständlich auch möglich, mehrere derartiger Anzeigen parallel zueinander anzuzeigen. Zweckmäßig kann es hierbei sein, wenn beispielsweise bei einem Produktionsprozeß mit zwei parallel arbeitenden Produktionsstationen jeder Station eine solche Anzeige zugeordnet wird. Sofern nur eine Station fehlerhafte Gegenstände produziert, werden in der dieser zugeordneten Anzeige vermehrt Fehlerergebnisse angezeigt werden. Auch kann es zweckmäßig sein, die Prüfergebnisse zu unterteilen und mehreren Anzeigen zuzuordnen. Die Häufigkeit und die Periodizität eines bestimmten Fehlers kann dadurch leicht erkannt werden. Hierbei kann es zweckmäßig sein, wenigstens eine Anzeige vorzusehen, die den resultierenden Ausschuß anzeigt.

Es ist offensichtlich, daß diese Darstellungsform einen erhöhten Informationsgehalt hat als die herkömmliche Balkendarstellung. Es ist möglich, neben der Fehlerhäufigkeit auch das zeitliche Auftreten optisch in einer gut wahrnehmbaren Weise darzustellen. Eventuelle Systemfehler, die periodisch auftretende Fehler verursachen, können somit schnell erkannt und durch entsprechende Eingriffe in den Produktionsprozeß eliminiert werden. Der Ausschuß kann somit verringert werden.

Die Erfindung wird im folgenden Anhand der schematischen Zeichnung näher erläutert. Es zeigen:
- Fig. 1: eine Anzeigeform gemäß dem Stand der Technik,
- Fig. 2: eine erste Anzeigeform gemäß der Erfindung und
- Fig. 3: eine zweite Anzeigeform gemäß der Erfindung.

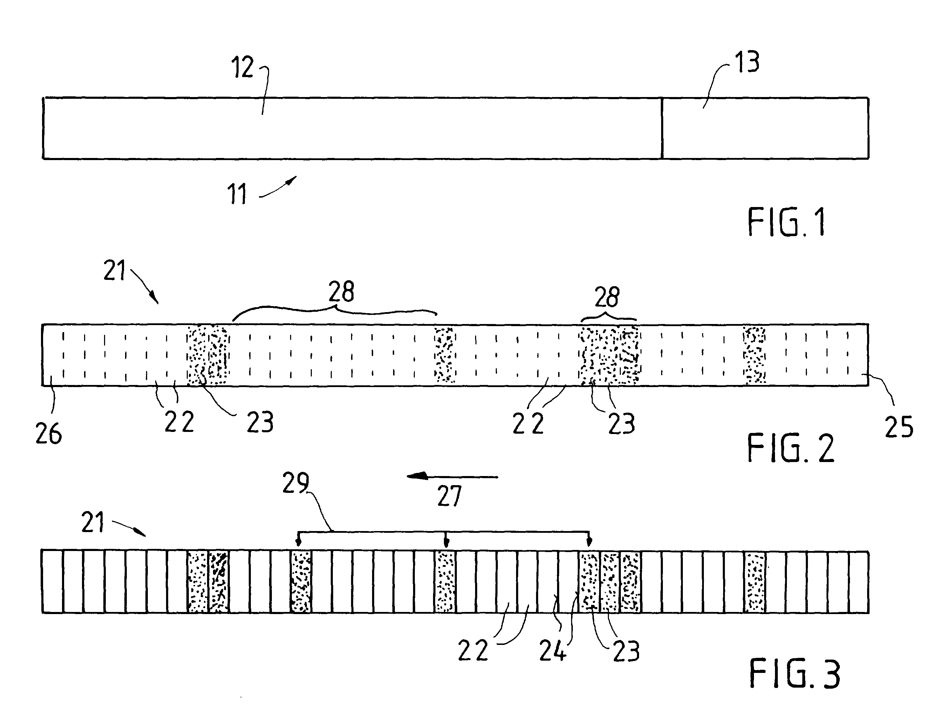

In Fig. 1 ist eine übliche Anzeige der Fehlerhäufigkeit bei einem taktweise arbeitenden Prüfprozeß von Gegenständen dargestellt. Die Anzeige ist in Form eines Balkens 11 ausgebildet, der auf einem nicht dargestellten Bildschirm eines Monitors erzeugbar ist. Der Monitor ist der Datenverarbeitungsanlage zugeordnet, mit der auch der Prüfprozeß gesteuert werden kann. Die Gesamtlänge des Balkens 11 entspricht der Gesamtzahl der geprüften Gegenstände. Der in der Zeichnung linke Balkenabschnitt 12 stellt beispielsweise den Anteil der fehlerfreien Gegenstände dar, während der sich daran anschließende rechte Balkenabschnitt 13 dem Anteil der fehlerhaften Gegenstände entspricht. Es ist offensichtlich, daß hiermit nur die Fehlerhäufigkeit darstellbar ist.

Die in Fig. 2 dargestellte Anzeigeform ist in Form eines Balkens 21 ausgebildet, der ebenfalls auf einem Bildschirm eines Monitors erzeugbar ist. Der Balken ist in eine Vielzahl von Anzeigefeldern 22, 23 unterteilt, die jeweils einem Prüfergebnis zugeordnet werden können.

Im einzelnen ist die Anordnung so getroffen, daß Mittel vorhanden sind, die die zeitlich aufeinanderfolgenden Prüfergebnisse den räumlich aufeinanderfolgenden Anzeigefeldern zuordnen. Die Anzeigefelder besitzen wenigstens zwei Anzeigearten, mit denen das Prüfergebnis eines fehlerfreien Gegenstandes in unterschiedlicher Weise zu dem eines fehlerhaften Gegenstandes darstellbar ist. Bei dem in der Zeichnung dargestellten Ausführungsbeispiel wird mit der Bezugsziffer 23 die Anzeigeart eines Anzeigefeldes 23 bezeichnet, die einem fehlerhaften Gegenstand entspricht. Die Bezugsziffer 22 ist der Anzeigeart eines Anzeigefeldes zugeordnet, das einem Prüfergebnis eines fehlerfreien oder zumindest brauchbaren Gegenstandes entspricht.

In Fig. 2 sind die Anzeigefelder unmittelbar aneinandergrenzend angeordnet. Dies führt dazu, daß aufeinanderfolgende gleiche Prüfergebnisse einen entsprechend größeren Balkenabschnitt 28 innerhalb des Balkens 21 erzeugen.

In Fig. 3 ist eine andere Darstellungsform gezeigt, bei welchem zwischen den Anzeigefeldern 22, 23 Trennlinien 24 vorhanden sind, die einen Kontrast zu beiden Anzeigearten aufweisen. Damit kann die Übersichtlichkeit erhöht werden. Es kann auch vorgesehen werden, daß die einzelnen Anzeigefelder mit Abstand zueinander angeordnet sind. Dies erfordert jedoch einen erhöhten Platzbedarf auf dem Bildschirm des Monitors.

Beide Ausführungen der Anzeigen können ohne weiteres auf einem Bildschirm eines Monitors erzeugt werden. Die dazu erforderlichen Mittel sind allgemein bekannt und bedürfen daher keiner weiteren Erläuterung. Grundsätzlich können die einzelnen Anzeigefelder auch durch diskrete Leuchtmittel gebildet werden, beispielsweise durch eine Vielzahl von Leuchtdioden in Form einer Leuchtdiodenkette.

Es ist offensichtlich, daß durch das Vorsehen von diskreten Anzeigefeldern der Anzahl der darstellbaren Prüfergebnisse prinzipiell Grenzen gesetzt sind. Der Balken 21 kann daher nur eine bestimmte Anzahl von Prüfergebnissen, beispielsweise nur die letzten 100 Prüfergebnisse, anzeigen. Für eine nachvollziehbare Darstellung des Prüfverfahrens daher sind Mittel vorgesehen, die das letzte Prüfergebnis dem Anzeigefeld des unmittelbar vorhergehenden Prüfergebnis zuordnen. Dieses Anzeigefeld 25 befindet sich vorzugsweise am linken oder rechten Rand des Balkens. Die anderen vorhergehenden Prüfergebnisse werden jeweils um ein um eins inkrementiertes Anzeigefeld dargestellt, so daß das älteste darstellbare Prüfergebnis im Anzeigefeld 26 anschließend nicht mehr dargestellt wird. Damit wird eine fließende Anzeige der Prüfergebnisse erzeugt, in deren die räumliche Zuordnung der Anzeigefelder der zeitlichen Abfolge der Prüfergebnisse entspricht. Ein einzelnes Prüfergebnis durchwandert demnach den Balken in Richtung des Pfeiles 27 vom Feld 25 bis zum letzten Feld 26. Anschließend wird dieses Prüfergebnis nicht mehr dargestellt.

Es kann weiterhin vorgesehen werden, daß durch eine Auswerteinheit die Periodizität der auftretenden Fehler ermittelt und in der Anzeige dargestellt wird. Dies kann beispielsweise durch eine Veränderung der farblichen Darstellung der diese periodischen Fehler anzeigenden Anzeigefelder erfolgen. Es kann auch vorgesehen werden, daß die diese Fehler anzeigenden Anzeigefelder zwischen zwei Anzeigearten intermittierend wechseln, beispielsweise blinken. Weiterhin können zusätzliche Anzeigemittel vorgesehen werden, die die entsprechenden Anzeigefelder verbinden und kennzeichnen. Die Verbindung kann beispielswise durch eine auf dem Bildschirm erzeugte Klammer 29 erfolgen, die die betreffenden Anzeigefelder kennzeichnet.

Es ist offensichtlich, daß mit einer solchen Darstellungsform das Prüfverfahren gut überwacht werden kann. Der überwachte Zeitabschnitt läßt sich durch die Wahl der Anzahl der Anzeigefelder variieren.

## Patentansprüche

1. Verfahren zum Anzeigen der Fehlerhäufigkeit und der Fehlerfrequenz bei einem taktweise arbeitenden Inspektionssystem, mit welchem zu prüfende Gegenstände nach der Inspektion als fehlerhaft oder fehlerfrei klassifiziert werden und dieses Prüfergebnis angezeigt wird, dadurch gekennzeichnet, daß eine Vielzahl von benachbarten unabhängigen diskreten Anzeigefeldern (22, 23) vorgesehen ist, die jeweils ein Prüfergebnis wenigstens eines geprüften Gegenstands darstellen und wenigstens zwei Anzeigearten aufweisen, um das Prüfergebnis, das einem fehlerfreien Gegenstand entspricht, in unterschiedlicher Weise zu dem Prüfergebnis darzustellen, das einem fehlerhaften Gegenstand entspricht, und daß die zeitlich aufeinanderfolgenden Prüfungsergebnisse durch räumlich aufeinanderfolgende benachbarte Anzeigefelder angezeigt werden.

2. Verfahren nach Anspruch 1, dadurch gekennzeichnet, daß zumindest bei einer größeren Anzahl von Prüfergebnissen als Anzeigefelder das Prüfergebnis des zuletzt geprüften Gegenstandes durch das Anzeigefeld (25) dargestellt wird, das das unmittelbar vorhergehende Prüfergebnis zeigt, und daß die vorhergehenden Prüfergebnisse jeweils durch ein um eins inkrementiertes Anzeigefeld dargestellt werden derart, daß die zeitlich aufeinanderfolgenden Prüfergebnisse fließend durch räumlich aufeinanderfolgende benachbarte Anzeigefelder dargestellt werden.

3. Verfahren nach Anspruch 1 oder 2, dadurch gekennzeichnet, daß die Anzeigefelder Bildsegmente eines Bildschirmes sind.

4. Verfahren nach einem der Ansprüche 1 bis 3, dadurch gekennzeichnet, daß die benachbarten Anzeigefelder einen Abstand zueinander aufweisen oder unmittelbar aneinander angrenzen.

5. Verfahren nach einem der Ansprüche 1 bis 4, dadurch gekennzeichnet, daß die Anzeigefelder durch wenigstens eine Trennlinie (24) voneinander getrennt sind, die einen Kontrast zu den wenigstens zwei Anzeigearten besitzt.

6. Verfahren nach einem der Ansprüche 1 bis 5, dadurch gekennzeichnet, daß Anzahl der fehlerhaften Gegenstände und/oder die Anzahl der fehlerfreien Gegenstände in Relation zur Gesamtzahl der geprüften Gegenstände gesetzt werden, und daß bei Unterschreiten oder Überschreiten eines einer Relation zugeordneten Schwellenwerts die einen fehlerfreien Gegenstand darstellende Anzeigeart und/oder die einen fehlerhaften Gegenstand darstellende Anzeigeart der Anzeigefelder geändert wird.

7. Verfahren nach einem der Ansprüche 1 bis 6, dadurch gekennzeichnet, daß mehrere parallele Anzeigen (21) vorgesehen sind, und daß bei einem Produktionsprozeß mit mehreren parallel arbeitenden Produktionsstationen jeder Station eine Anzeige zugeordnet wird.

8. Verfahren nach einem der Ansprüche 1 bis 7, dadurch gekennzeichnet, daß die Prüfergebnisse unterteilt und/oder klassifiziert werden und mehreren parallelen Anzeigen (21) zuzuordnet werden.

9. Verfahren nach einem der Ansprüche 1 bis 8, dadurch gekennzeichnet, daß durch eine Auswerteinheit die Periodizität der auftretenden Fehler detektiert und in der Anzeige dargestellt wird.

10. Verfahren nach einem der Ansprüche 1 bis 9, dadurch gekennzeichnet, daß die Prüfgegenstände optische Datenträger, wie Compact-Discs, DVD's, CD-ROM's oder CD-R's sind.
